# EUROPEAN PATENT APPLICATION

(11) **EP 4 691 893 A1**
(43) Date of publication of application: **11.02.2026**
(21) Application number: 24796159.2
(22) Date of filing: 25.04.2024
(51) Int. Cl.: B62J 17/04, B60J 1/00

(54) **ALL-TERRAIN VEHICLE AND WIND SHIELDING DEVICE THEREOF**

(30) Priority: 27.04.2023 CN 202310489078
(71) Applicant: Zhejiang CFMOTO Power Co., Ltd., Hangzhou, Zhejiang 311199 (CN)
(72) Inventor: MO, Ronglei, Hangzhou, Zhejiang 311199 (CN); LI, Zhiyong, Hangzhou, Zhejiang 311199 (CN); XIE, Zhiguo, Hangzhou, Zhejiang 311199 (CN)
(74) Representative: Sun, Yiming
(86) International application number: PCT/CN2024/089751
(87) International publication number: WO 2024/222783

(57) **Abstract**

The present application provides an all-terrain vehicle and a windshield assembly thereof. The all-terrain vehicle includes a frame, a plurality of wheels, a vehicle cover, and a windshield assembly. The plurality of wheels are connected to the frame. The vehicle cover is at least partially arranged on the frame. The windshield assembly includes a mount device and connected to the frame by the mount device. The windshield assembly further includes a windshield and an outer frame assembly, the windshield is made of colorless and transparent amorphous thermoplastic materials. The outer frame assembly is designed as a split type and includes a first outer frame, a second outer frame, and a connection member, the first outer frame and the second outer frame are connected by the connection member, and the first outer frame and the second outer frame cooperatively define a receiving space, and the windshield is received in the receiving space. Through the above, an all-terrain vehicle and windshield assembly thereof are provided, the windshield assembly is easy to disassemble and assemble.

## Description

### RELATED APPLICATION INFORMATION

The present application claims the benefit of priority to Chinese Patent Application No. 202310489078.3, entitled "all-terrain vehicle and windshield assembly thereof", filed with the Chinese Patent Office on April 27, 2023. The entire contents of the above-referenced application are incorporated herein by reference.

### FIELD OF THE DISCLOSURE

The present application relates to the field of vehicles, and particularly to an all-terrain vehicle and a windshield assembly thereof.

### BACKGROUND OF THE DISCLOSURE

An all-terrain vehicle is a type of vehicle that can travel on all terrains, and have a higher chassis, a suspension with excellent shock absorption, tires with good grip, and strong power. Compared to ordinary vehicles, all-terrain vehicles are capable of driving in extremely harsh environments, including but not limited to beaches, mountains, forests, swamps, and other terrains, and have been widely used in farms and entertainment venues.

For all-terrain vehicles with a cab, the cab is generally supported by a cab frame located on the vehicle body, and doors are installed on both sides of the cab. All-terrain vehicles generally includes a front windshield assembly at the front end of the cab, which is directly connected to the frame and difficult to assemble and disassemble. The front windshield assembly of the all-terrain vehicle is generally fixedly connected and cannot be opened or can only be fully opened but the opening angle cannot be adjusted arbitrarily. A wiper device is generally mounted on the front windshield assembly of all-terrain vehicles, and the wiper and nozzle are generally arranged on the frame with a fixed mount position. The efficiency of the wiper device is not high. How to reasonably arrange the position of the wiper and nozzle to improve the efficiency of the wiper device while keeping the driver's line of sight clear is also an urgent problem to be solved in this field.

### SUMMARY OF THE INVENTION

Embodiments of the present application provide electric all-terrain vehicles to solve at least one problem existing in the background.

In order to meet the requirements of disassembly and assembly, it is necessary to provide a windshield assembly that is easy to assembly and disassembly.

In a first aspect, an embodiment provides an electric all-terrain vehicle, which includes a frame, a plurality of wheels, a vehicle cover, and a windshield assembly. The plurality of wheels are connected to the frame. The vehicle cover is at least partially arranged on the frame. The windshield assembly includes a mount device and connected to the frame by the mount device. The windshield assembly further includes a windshield and an outer frame assembly, the windshield is made of colorless and transparent amorphous thermoplastic materials. The outer frame assembly is designed as a split type and includes a first outer frame, a second outer frame, and a connection member, the first outer frame and the second outer frame are connected by the connection member, and the first outer frame and the second outer frame cooperatively define a receiving space, and the windshield is received in the receiving space.

In a second aspect, an embodiment provides a windshield assembly, which includes a windshield and an outer frame assembly. The outer frame assembly is designed as a split type and includes a first outer frame, a second outer frame, and a connection member, the first outer frame and the second outer frame are connected by the connection member, and the first outer frame and the second outer frame cooperatively define a receiving space, and the windshield is received in the receiving space.

In a third aspect, an embodiment provides an all-terrain vehicle, which includes a frame, a plurality of wheels, a vehicle cover, a windshield assembly, and a wiper device. The plurality of wheels are connected to the frame. The vehicle cover is at least partially arranged on the frame. The windshield assembly includes a mount device and connected to the frame by the mount device. The wiper device is at least partially mounted on the windshield assembly. The windshield assembly further includes a windshield and an outer frame assembly, the windshield is made of colorless and transparent amorphous thermoplastic materials. The outer frame assembly is designed as a split type and includes a first outer frame, a second outer frame, and a connection member, the first outer frame and the second outer frame are connected by the connection member, and the first outer frame and the second outer frame cooperatively define a receiving space, and the windshield is received in the receiving space.

Compared with existing vehicles, the outer frame assembly is designed as a split type, which includes a first outer frame, a second outer frame, and a connection member. The first outer frame and the second outer frame are connected by the connection member. When assembling, the windshield can be first inserted into the first outer frame, and then the first outer frame can be combined with the second outer frame, thereby greatly improving the efficiency of disassembling and assembling the windshield assembly.

For better understanding of other features, objectives, and advantages of the present application, the details of one or more embodiments of the present application are described in the following drawings and description.

### BRIEF DESCRIPTION OF THE DRAWINGS

The drawings described herein are intended to provide further understanding of the present application and constitute a part of the present application. The illustrative embodiments and their descriptions of the present application are used to explain the present application and do not constitute limitation of the present application. In FIGS.
FIG. 1 is a perspective view of an all-terrain vehicle of the present application.
FIG. 2 is another perspective view of the all-terrain vehicle of the present application.
FIG. 3 is a perspective view of the structure of a windshield assembly of the present application, which is in an opened state.
FIG. 4 is an enlarged view of part A in FIG. 2 of the present application.
FIG. 5 is a perspective view of a drive component of the present application.
FIG. 6 is a schematic diagram of the connection relationship of the wiper device in the present application.
FIG. 7 is an exploded view of the windshield assembly of the present application.
FIG. 8 is a perspective view of one state of the lock device of the present application.
FIG. 9 is another perspective view of another state of the lock device of the present application.
FIG. 10 is a perspective view of one state of the lock device in another embodiment of the present application.
FIG. 11 is a perspective view of another state of the lock device in another embodiment of the present application.

### DETAILED DESCRIPTION

For better understanding of the above objects, features and advantages of the present invention, embodiments of the present disclosure will be described in detail below with reference to the accompanying drawings.

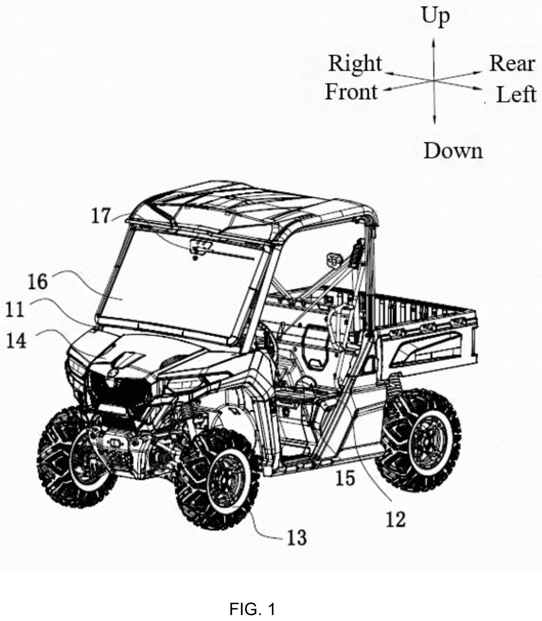

As shown in FIG. 1, the present application provides an all-terrain vehicle 100, which includes a frame 11, a battery assembly 12, a plurality of wheels 13, a vehicle cover 14, a dashboard 15, a windshield assembly 16, and a wiper device 17. The frame 11 is used to form the overall structure of all-terrain vehicle 100 and support vehicle cover 14 and the windshield assembly 16. The battery assembly 12 is at least partially mounted on the frame 11, providing electrical energy to drive the all-terrain vehicle 100. The plurality of wheels 13 drives the all-terrain vehicle 100 to travel. The dashboard 15 is at least partially mounted on the frame 11 to display driving information of the all-terrain vehicle 100 and various electrical components are arranged on the dashboard 15 for operating the all-terrain vehicle 100 by a driver. The windshield assembly 16 is mounted at the front end of a cab in the all-terrain vehicle and connected to the frame 11. The windshield assembly 16 has a first position state, a second position state, and a third position state, so that the cab in the all-terrain vehicle 100 has a closed state and ventilation states. When the windshield assembly 16 is in the first position state, the windshield assembly 16 is closed. When the windshield assembly 16 is in the second position, the windshield assembly 16 is partially-opened. When the windshield assembly 16 is in the third position, the windshield assembly 16 is fully-opened (to the maximum extent). An angle defined by the windshield assembly 16 in the second position and the windshield assembly 16 in the first position is smaller than an angle defined by the windshield assembly 16 in the fully-opened state and the windshield assembly 16 in the first position. The wiper device 17 is mounted on the windshield assembly 16 to clean the windshield assembly 16 and provide the driver with good visibility. For better understanding of the present application, the directions of "front", "rear", "left", "right", "up" and "down" are defined in FIG. 1. In the present application, a length direction refers to a front-rear direction shown in FIG. 1, a width direction refers to a left-right direction shown in FIG. 1, and a height direction refers to a up-down direction shown in FIG. 1.

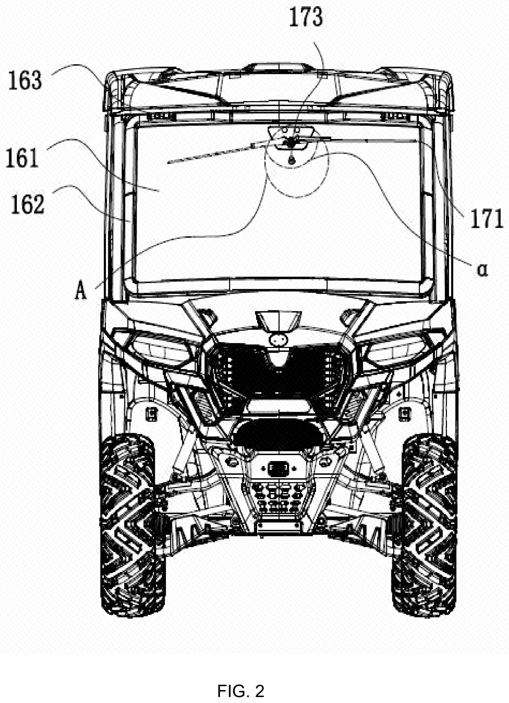

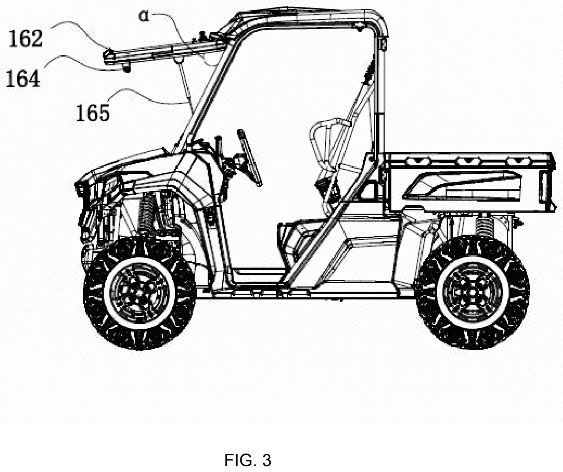

As shown in FIG. 2 and FIG. 3, the windshield assembly 16 includes a windshield 161, an outer frame assembly 162, a mount device 163, a lock device 164, and a support 165. The outer frame assembly 162 defines a receiving space, and the windshield 161 is received in the receiving space. The outer frame assembly 162 is rotatably connected to the frame 11 through the mount device 163. The windshield 161 is mounted to the outer frame assembly 162 and rotates synchronously with the outer frame assembly 162. The lock device 164 is at least partially mounted on the outer frame assembly 162 to cooperate with the mount device 163 to close the windshield 161, or to cooperate with the support 164 to fix the windshield 16 at an angle when the windshield 16 is in the partially opened state. The support 165 is at least partially mounted on the frame 11 and used to support the windshield 161 when the windshield 161 is opened.

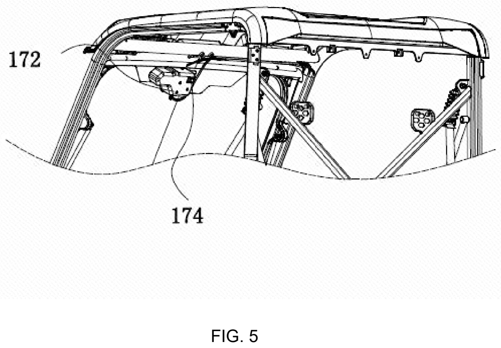

As shown in FIG. 2 to FIG.7, the wiper device 17 includes a wiper blade 171, a driving component 172, a nozzle173, and an operating member 174. The windshield assembly 16 defines a plurality of mounting holes 166, and the wiper device 17 at least partially passes through the mounting holes 166. The wiper blade 171 is mounted on the windshield 161 and is positioned outside of the cab. The wiper blade 171 is detachably connected to the windshield 161 through the mounting holes 166 and swings relative to the windshield 161 under the driving of the driving component 172. The drive component 172 is electrically connected to battery assembly 12 and provides power to the wiper blades 171 and the nozzle 173. The nozzle 173 is detachably connected to the windshield 161 through the mounting hole 166 and sprays water under the control of the driving component 172. The nozzle 173 passes through the windshield 161. The operating member 174 is electrically connected to the wiper blades 171, the driving component 172, and the nozzle 173, respectively, for controlling the operation of the wiper blades 171 and the nozzle 173. The operating member 174 is mounted inside the cab of the all-terrain vehicle 100. Optionally, the operating member 174 may be mounted on the driving component 172 for easy operation by the driver. It should be noted that the operating member 174 may also be arranged on the dashboard 15, as long as it is convenient for the driver to operate. The wiper device 17 further includes a water pipe (not shown) and a water tank 175. The driving component 172 includes a water pump 1721 and a wiper motor 1722. The water pipe is used to connect the water pump with the nozzle 173 and the water from the water tank 175 is pumped through the water pipe to the nozzle 173.

As an optional embodiment, the material of the windshield 161 is a colorless and transparent amorphous thermoplastic material. As an example, the material of the windshield 161 may be PC polycarbonate. The special installation method of the wiper device 17 is related to the material of windshield 161. PC polycarbonate is different from brittle materials such as glass. This material is not only transparent, has high strength, toughness, and impact resistance, but also convenient for cutting mounting holes 166. The wiper device 17 may be directly mounted on the windshield 161 through the mounting holes 166, without the need to defines mounting points on the frame 11 or other parts, and the overall structure is compact. Therefore, the wiper device 17 can be freely replaced on the windshield 161 without interference from other components. The positions of the wiper blade 171 and the nozzle 173 are easy to adjust, and the mounting points can be arranged according to the driver's seat position of different vehicle models, thereby making it highly versatile. The number of wiper blades 171 and nozzles 173 may also be easily changed. It should be noted that the windshield 161 may also be made of other transparent materials with high strength, toughness, and impact resistance that are convenient for cutting and punching, as long as the above effects are achieved.

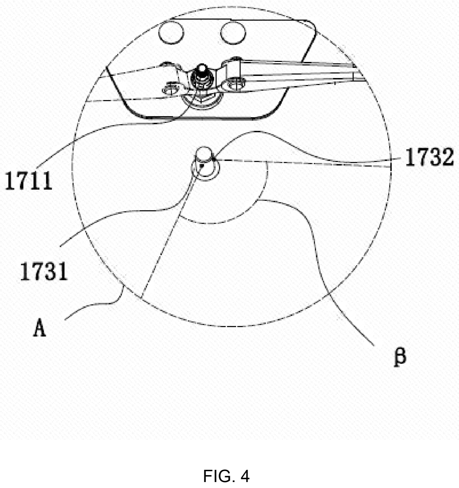

As shown in FIG. 2 and FIG. 4, as an optional embodiment, the nozzle 173 is detachably connected to the windshield 161, and the nozzle 173 is located at the upper portion of the windshield 161 and close to the wiper blades 171. The water pipe connecting the nozzle 173 extends substantially along the front edge of the frame 11, and the water in the water tank is sprayed out by nozzle 173 for cleaning windshield 161. The nozzle 173 passes through the windshield 161 and includes a connection portion 1731 and a water outlet portion 1732. The nozzle 173 is connected to the windshield 161 through the connection portion 1731, and the connection portion 1731 is capable of rotating relative to the windshield 161. Therefore, the nozzle 173 is capable of rotating according to the driver's needs to adjust the water spraying direction of the nozzle 173. The water outlet portion 1732 is positioned outside the cab. The water outlet portion 1732 may spray water within a predetermined range. As an embodiment, the water outlet portion 1732 may define two water outlet holes around the nozzle 173. It should be noted that the water outlet portion 1732 defines a substantially arc-shaped spraying area, in other words, the water outlet portion 1732 is capable of spraying a pre-determined area of a spraying face. It should be noted that the spraying face of the water outlet portion 1732 has divergence. Based on the road conditions of the all-terrain vehicle, the spraying faces of the two water outlet holes can cover a predetermined area, that is, it is not necessary for the spraying faces of the two water outlet holes to intersect or overlap to meet the spraying demand. As an embodiment, the angle α between the two water outlet holes is greater than or equal to 70 degrees and less than or equal to 110 degrees. As an optional embodiment, the angle α between the two water outlet holes is greater than or equal to 80 degrees and less than or equal to 100 degrees. As an optional embodiment, the angle α between the two water outlet holes is greater than or equal to 90 degrees and less than or equal to 95 degrees. In some preferred embodiments, the angle between the two water outlet holes may be arranged to allow the spraying faces of the two water outlet holes intersect or partially overlap. Therefore, the spraying area of the nozzle 173 can be reasonably matched with the wiper blades 171 to clean the windshield without interfering with the driver's field of view. No matter the angle between the two water outlet holes is greater or less than the range of the angle α, the spraying area has less overlap with the operating range of wiper blades 171. It should be noted that the angle α between the two water outlet holes may be 85 degrees, 88 degrees, 108 degrees, or the like.

It should be noted that the number of water outlet holes in the water outlet portions 1732 may be three or more, and the number of the nozzles 173 may be two or more. The number can be changed based on actual needs. This not only meet the cleaning needs, but also has a simple layout, reduces interference between water pipes and other components, and has a more beautiful appearance, reducing interference with the driver's line of sight.

As shown in FIG. 2, FIG. 4, and FIG. 6, the wiper blades 171 are positioned on the upper portion of the windshield 161 and substantially positioned on the central line of the all-terrain vehicle 100. It should be noted that the wiper blades 171 may also be positioned slightly closer to a driver's seat. As an embodiment, the number of wiper blades 171 may be 1, and the wiper blade 171 includes a rotating shaft 1711. The wiper blade 171 swings back and forth around the rotating shaft 1711 under the control of the driving component 172. The maximum swing angle β of the wiper blade 171 is greater than or equal to 150 degrees and less than or equal to 170 degrees. As an optional embodiment, the maximum swing angle β of the wiper blade 171 may be greater than or equal to 155 degrees and less than or equal to 165 degrees. As an optional embodiment, the maximum swing angle β of the wiper blade 171 may be greater than or equal to 158 degrees and less than or equal to 162 degrees. Therefore, the wiper blade 171 can be reasonably matched with the spraying area of the nozzle 173 to clean the windshield 161. If the maximum swing angle β of the wiper blade 171 is too great (greater than the range of the maximum swing angle β), the wiper blade 171 may interfere with other components. If the maximum swing angle β of the wiper blade 171 is too small (smaller than the range of the maximum swing angle β), the cleaning effect of wiper blade 171 is insufficient. It should be noted that the maximum swing angle β of the wiper blade 171 may be 156 degrees, 161degrees, 168 degrees, or the like.

In an optional embodiment, the driving component 172 includes a control unit 1723, and the operating member 174 is capable of transmitting control instructions to the control unit 1723 in response to external forces. The control unit 1723 is capable of determining the indication results for the wiper blade 171 and the nozzle 173 based on the control instructions from the buttons, where the indication results can indicate the start and stop of the wiper blade 171 and whether the nozzle 173 sprays water.

Optionally, the control unit 1723 of the driving component 172 may be connected to the operating member 174 through a cable. When the driver operates the operating member 174, the control unit 1723 can receive instructions transmitted by the operating member 174 and determine the driver's instructions for the wiper blade 171 and the nozzle 173 based on the instructions. The operating element 174 may be a button, which generates control instructions in response to the force applied by the driver's contact, pressing, and other methods of the button, and transmits the instructions to the control unit 1723. Based on the instructions, the driver's instructions for the wiper blade 171 and for the nozzle 173 are determined, such as "turn on the wiper blade", "turn on the wiper blade and spray water simultaneously", "turn off the wiper blade and spray water".

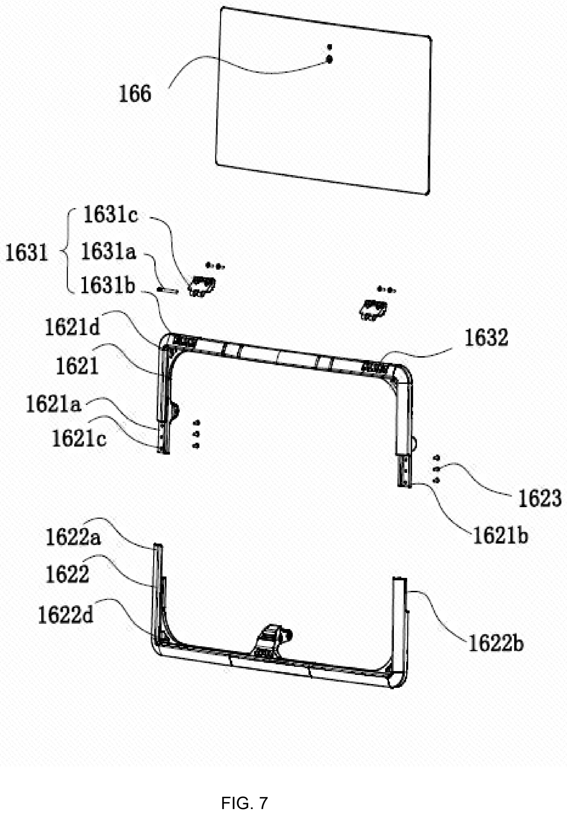

As shown in FIG. 3 and FIG. 7, as an embodiment, the outer frame assembly 162 may be designed as a split type, which includes a first outer frame 1621, a second outer frame 1622, and a connection member 1623. In an optional embodiment, the first outer frame 1621 is the upper outer frame, and the second outer frame 1622 is the lower outer frame. The first outer frame 1621 and the second outer frame 1622 are connected by a connection member 1623 to form a complete outer frame and to define a receiving space. In another optional embodiment, the outer frame assembly 162 may also be a left and right split type, for example, the outer frame assembly 162 may include a left outer frame (not shown) and a right outer frame (not shown), and the outer frame assembly 162 is not necessarily divided into only two outer frame combinations. It may be divided into three or more frame combinations according to the actual installation position of other components. It should be noted that the outer frame assembly 162 may also be integrated, as long as it can achieve the basic functions of the outer frame assembly 162 and is easy to mount.

Optionally, the first outer frame 1621 is provided with a first connecting portion 1621a and a second connecting portion 1621b, and the second outer frame 1622 is provided with a third connecting portion 1622a and a fourth connecting portion 1622b. The first connecting portion 1621a and the second connecting portion 1621b are respectively arranged at the opening of the first outer frame 162, matched with each other. The third connecting portion 1622a and the fourth connecting portion 1622b are respectively arranged at the opening of the first outer frame 1622. The first connecting portion 1621a is connected to the third connecting portion 1622a through a connection member 1623, and the second connecting portion 1621b is connected to the fourth connecting portion 1622b through a connection member 1623. The first connecting portion 1621a defines a threaded hole 1621c, the third connecting portion 1622a defines a threaded hole 1622c (not shown), and the connection member 1623 is a screw. The connection member 1623 passes through the threaded hole 1621c and the threaded hole 1622c for connecting the first connecting portion 1621a and the third connecting portion 1622a. In an optional embodiment, the number of threaded holes 1621c, 1622c, and the number of screws may be 3. It should be noted that the number of threaded holes 1621c, 1622c, and screws may be two, four, or more, as long as meets the actual connection requirements. The first connecting portion 1621a, the third connecting portion 1622a, and the connection member 1623 may be fixed in other combinations, such as riveting, insertion, center connection, or the like. It should be noted that the connection method between the second connecting portion 1621b and the fourth connection part 1622b is the same in principle to the connection method between the first connecting portion 1621a and the third connection part 1622a mentioned above, and will not be repeated here.

As shown in FIG. 7, the inner side of the first outer frame 1621 defines a first receiving groove 1621d for mounting the windshield 161, and the inner side of the second outer frame 1622 defines a second receiving groove 1622d. The first receiving groove 1621d and the second receiving groove 1622d are arranged to be distributed along the inner ring line of the outer frame, and after the first outer frame 1621 and the second outer frame 1622 are connected, the first receiving groove 1621d and the second receiving groove 1622d cooperatively defines a substantially in fluid communication groove, and the windshield 161 can be clamped in the space surrounded by the outer frame assembly 162. The opening size of the first receiving groove 1621d and the second receiving groove 1622d is substantially the same as the thickness of the outer periphery of the windshield 161. A sealing strip 1611 is arranged around the periphery of the windshield 161 for improving the strength and sealing of the windshield assembly 16.

In an optional embodiment, when assembling the windshield 161, the windshield 161 may be first combined with the first outer frame 1621, and the windshield 161 can be inserted into the first receiving groove 1621d. Then, the windshield 161 can be combined with the second outer frame 1622, and the windshield 161 can be inserted into the second receiving groove 1622d. Optionally, the windshield 161 can be first combined with the second outer frame 1622, and the windshield 161 can be inserted into the second receiving groove 1622d. Then, the windshield 161 can be combined with the first outer frame 1621, and the windshield 161 can be inserted into the first receiving groove 1621d. Finally, the first outer frame 1621 and the second outer frame 162 can be connected by a connection member 1623 to complete the assembly. In this way, the first outer frame 1621 can be detachably connected to the second outer frame 1622, thereby reducing the assembly difficulty of the outer frame assembly 162 and improving the mounting efficiency of the outer frame assembly 162.

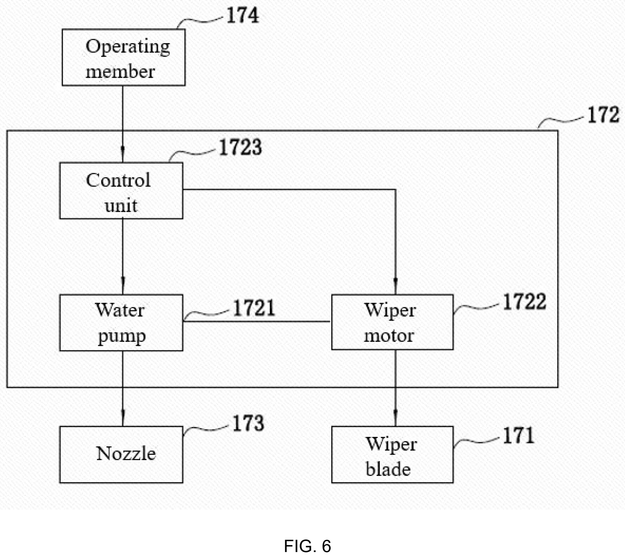

As shown in FIG. 2 and FIG. 7, the mount device 163 is arranged at the upper end of the outer frame assembly 162 and at least partially rotationally connected to the frame 11. The mount device 163 includes a rotating member. As an embodiment, the mount device 163 may include two rotating members, including a first rotating member 1631 and a second rotating member 1632. The first rotating member 1631 and the second rotating member 1632 may be hinges connecting the frame 11 and the outer frame assembly 162. A straight line 101 extends along a left-right direction of the all-terrain vehicle 100, and the rotating member can drive the windshield assembly 16 to rotate about the straight line 101. Particularly, the windshield assembly 16 is capable of rotating about the rotating member in a predetermined direction to a predetermined angle. More particularly, the maximum rotation angle γ of the windshield assembly 16 is greater than or equal to 60 degrees and less than or equal to 70 degrees. As an optional embodiment, the maximum rotation angle γ of the windshield assembly 16 may be greater than or equal to 62 degrees and less than or equal to 68 degrees. As an optional embodiment, the maximum rotation angle γ of the windshield assembly 16 may be greater than or equal to 64 degrees and less than or equal to 66 degrees. In this way, the maximum rotation angle γ of the windshield assembly 16 is at a suitable angle, which can provide a suitable open space and cooperate with the support 165 for easy opening and closing. It should be noted that when the maximum rotation angle γ of the windshield assembly 16 is greater than this range, in the fully opened state, the projection of the windshield assembly 16 in the front-rear direction will exceed the height of the cab of the all-terrain vehicle 100. The wind generated during the driving of the all-terrain vehicle 100 can easily damage and affect the windshield assembly 16, and there is a risk of breakage of the windshield assembly 16. If the maximum rotation angle γ of the windshield assembly 16 is smaller than this range, it does not meet the requirement for sufficient ventilation in the fully opened state. It should be noted that the maximum rotation angle γ of the windshield assembly 16 may be 61 degrees, 63 degrees, 67 degrees, or the like. As shown in FIG. 6, the first rotating member 1631 includes a connecting shaft 1631a, a first connecting portion 1631b, and a second connecting portion 1631c. The hinges are rotatable about the connecting shaft 1631a. The connecting shaft 1631a extends substantially along the left-right direction of the all-terrain vehicle 100. The first connecting portion 1631b defines a through-hole having an opening extending along the left-right direction of the all-terrain vehicle 100. The second connecting portion 1631c also defines a through-hole having an opening extending along the left-right direction of the all-terrain vehicle 100. The connecting shaft 1631a passes through the first connecting portion 1631b and the second connecting portion 1631c. The connection methods of the second rotating member 1632 are the same in principle as the connection methods of the first rotating member 1632, and will not be described in detail here. It should be noted that the number of rotating members may be three, four or more, as long as it meets the actual connection requirements.

As shown in FIG. 3, the support 165 includes a gas spring. As an embodiment, two gas springs are respectively arranged on the left and right sides of the outer frame assembly 162. One end of the gas spring is mounted on the frame 11, and the other end is mounted on the outer frame assembly 162. In an optional embodiment, the support 165 is capable of extending and retracting and providing a pre-load force. When the windshield assembly 16 is closed, the support 165 is substantially parallel to the outer frame assembly 162, and the support 165 is in a retracted state. During the opening process of the windshield assembly 16, an angle is defined between an axis of the support 165 and a plane where the outer frame assembly 162 is located, and the support 165 extends and gives the windshield assembly 16 an upward flipping force. When the windshield assembly 16 is opened to its limit position, the support 165 extends to its longest point, and at this time, the support 165 is substantially perpendicular to the plane where the outer frame assembly 162 is located.

As shown in FIG. 2, FIG. 3, and FIG. 7, the lock device 164 is positioned at the lower end of the outer frame assembly 162. The windshield assembly 16 has a fully opened state, a partially opened state, and a closed state, while the lock device 164 has a connected state and a dis-connected state. When the windshield assembly 16 is in the closed state, the lock device 164 is in the connected state and the lock device 164 is connected to the windshield assembly 16 and the dashboard 15. The mounting positions of the first rotating member 1631, the second rotating member 1632, and the lock device 164 are connected together to defines a triangular structure, thereby making the connection between the outer frame assembly 162 and the frame 11 more stable. The lock device 164 is adjusted, and the windshield assembly 16 is pushed forward, and the windshield assembly 16 can enter a partially opened state. When the windshield assembly 16 is in the partially opened state, the lock device 164 is in the connected state and the lock device 164 is connected to the windshield assembly 16 and the dashboard 15. At this time, the lock device 164 can be adjusted to change the opening angle of the windshield assembly 16. The lock device 164 is adjusted, and the windshield assembly 16 is further pushed forward, and the windshield assembly 16 can enter a fully opened state. When the windshield assembly 16 is in a fully opened state, the lock device 164 is in a dis-connected state. A portion of the lock device 164 is positioned on the windshield assembly 16, and another portion is positioned on the dashboard 15, and the two portions are dis-connected.

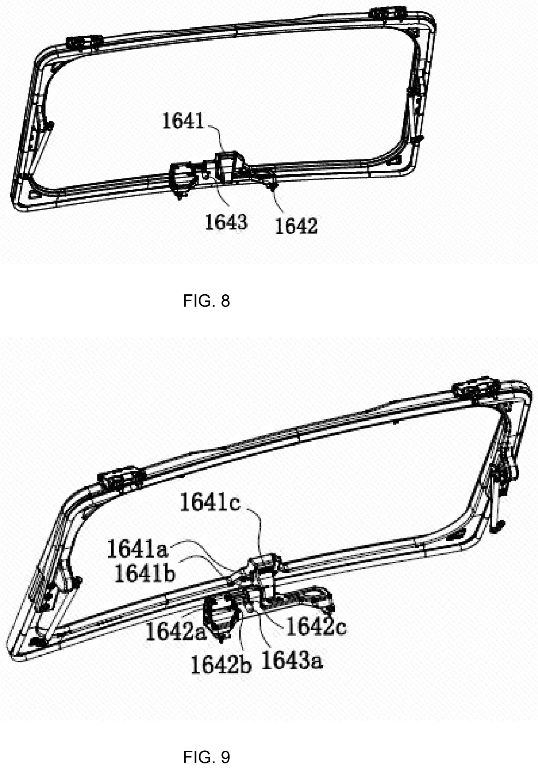

As shown in FIG. 8 and FIG. 9, as an optional embodiment, the lock device 164 includes a first fastener 1641, a second fastener 1642, and an operator 1643. The first fastener 1641 is arranged on the outer frame assembly 162, and is fixedly connected to or integrally formed with the outer frame assembly 162. The second fastener 1642 is arranged on the dashboard 165, and is fixedly connected to or integrally formed with the outer frame assembly 162. The operator 1643 is capable of opening and closing the windshield assembly 16 and controlling the opening angle of the windshield assembly 16 by connecting the first fastener 1641 and the second fastener 1642.

Optionally, the second fastener 1642 defines a receiving groove 1642a extending in the left-right direction of the all-terrain vehicle. The operator 1643 includes an insertion portion 1643a at least partially received within the receiving groove 1642a and is capable of sliding along the left-right direction within the receiving groove. The two ends of the receiving groove 1642a are designed as closed spaces with upward protrusions to accommodate and restrict the sliding of the operator 1643 within a predetermined range. The side of the second fastener 1642 near the driver is recessed downwards to define a first limit portion 1642b and a second limit portion 1642c. The operator 1643 further includes a handle portion 1643b, which can be positioned on either the first limit portion 1642b or the second limit portion 1642c. The first fastener 1641 is inwardly recessed on one side near the operator 1643 to define a first mating portion 1641a and a second mating portion 1641b. The first mating portion 1641a and the second mating portion 1641b may be respectively as through holes extending along the left-right direction of the all-terrain vehicle 100, and/or notches having opening towards the operator 1643. The first fastener 1641 further includes a protruding grip portion 1641c, the surface of the grip portion is designed with a concave-convex pattern to increase friction. The driver can apply force to open or close the windshield assembly 16 through the grip portion 1641c. The operator 1643 further includes an elastic element (not shown), which may be a spring. The spring is received in the receiving groove 1642a and at least partially connected to the insertion portion 1643a. When the insertion portion 1643a slides in the receiving groove 1642a, to provide a pre-load force in the left-right direction of the all-terrain vehicle 100. When the handle portion 1643b is in the first limit portion 1642b, the first fastener 1641 and the second fastener 1642 are disengaged, and the windshield assembly 16 is fully opened. When the handle portion 1643b is in the second limit portion 1642c, the insertion portion 1643a can be placed in the first mating portion 1641a or the second fitting portion 1641b. When the insertion portion 1643a can be placed in the first fitting portion 1641a, the windshield assembly 16 is fully closed. When the insertion portion 1643a is placed in the second mating portion 1641b, the support 165 partially extends. The first fastener 1641 cooperates with the support 165 to support and maintain the windshield assembly 16 at a fixed opening angle. The windshield assembly 16 is in a partially opened state, and the fixed opening angle of the windshield assembly 16 is greater than 0 degree and less than or equal to 10 degrees. As an optional embodiment, the fixed opening angle of the windshield assembly 16 may be greater than 2 degrees and less than or equal to 8 degrees. As an optional embodiment, the fixed opening angle of the windshield assembly 16 may be greater than or equal to 4 degrees and less than or equal to 6 degrees. In one embodiment, the fixed opening angle of the windshield assembly 16 may be 9 degrees. In this case, the windshield assembly 16 opens at a relatively small angle, which can provide a suitable ventilation opening without affecting the driving of the vehicle. It should be noted that the fixed opening angle of the windshield assembly 16 may be 5 degrees, 7 degrees, or the like. The fixed opening angle of the windshield assembly 16 refers to an angle defined by a projection of the windshield assembly 16 when the windshield assembly 16 is in the fully closed position and a projection of the windshield assembly 16 when the windshield assembly 16 is opened and held at a fully opened position, projected onto a plane perpendicular to the left-right direction.

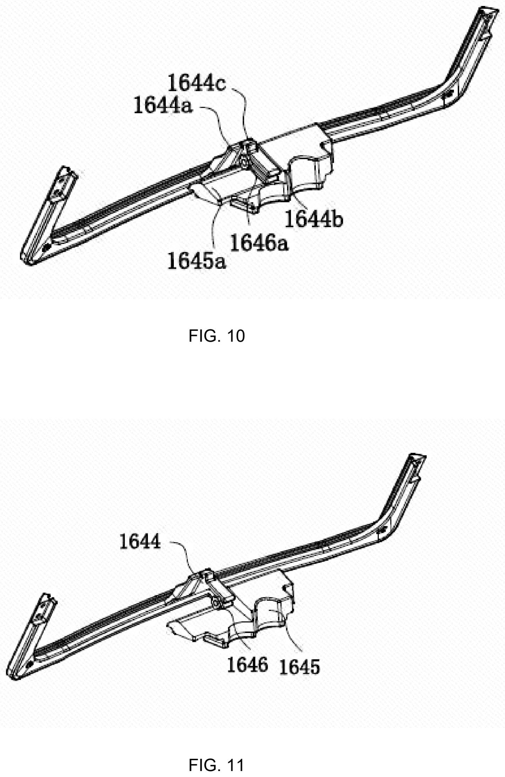

FIG. 10 and FIG. 11 show a windshield assembly 16 and a lock device 164 applied to the windshield assembly 16 in the second embodiment of the present application. The outer frame assembly 162, the mount device 163, and the support 165 are the same as these components in the first embodiment. The portions or components that are compatible with the first embodiment and this embodiment can be applied to this embodiment. The following are the differences between this embodiment and the first embodiment.

In this embodiment, the lock device 164 includes a first fixing member 1644, a second fixing member 1645, and an adjusting member 1646. The first fixing member 1644 may be arranged on the second outer frame 1622, and is fixedly connected to or integrally formed with the second outer frame 1622. The first fixing member 1644 is substantially perpendicular to the second outer frame 1622. The first fixing member 1644 extends substantially along the front-rear direction of the all-terrain vehicle 100. The first fixing member 1644 includes a first end 1644a for connecting the outer frame assembly and a second end 1644b for connecting the second fastener 1645. The first end 1644a is a closed end, and the second end 1644b is an open end. A projection of the inner contour of the first fixing member 1644 along the left-right direction is approximately U-shaped. The closed end is arranged at the bottom of the U-shape and connected to the second outer frame 1622, and the open end is arranged at the opening of the U-shape and faces the second fixing member 1645. The left and right ends of the first fixing member 1644 are fluidly coupled, and the upper and lower ends are closed to define an accommodating space. The adjusting member 1646 is at least partially accommodated within the accommodating space. The adjusting member 1646 is capable of entering the accommodating space from the second end 1644b and sliding between the first end 1644a and the second end 1644b. The first end 1644a is connected to the outer frame assembly 162, and the first end 1644a extends upward to define an upward protruding grip portion. The surface of the grip portion 1644c is designed as a concave -convex pattern to increase friction. The driver can give the windshield assembly 16 a force through the grip portion 1644c to open or close. After adjusting the windshield assembly 16 to a suitable position, the adjusting member 1646 provides a pre-load force along the left-right direction. At this time, the windshield assembly 16 can be opened and held by an arbitrary opening angle within the preset angle range. The windshield assembly 16 is in the partially-opened state, and the arbitrary opening angle of the windshield assembly 16 is greater than or equal to 0 degree and less than or equal to 15 degrees. As an optional embodiment, the arbitrary opening angle of the windshield assembly 16 may be greater than 0 degree and less than or equal to 10 degrees. As an optional embodiment, the arbitrary opening angle of the windshield assembly 16 may be greater than 0 degree and less than or equal to 6 degrees. In this embodiment, the arbitrary opening angle of the windshield assembly 16 may be 12 degrees. Though the above scheme, the windshield assembly 16 can be opened by a suitable angle within the numeric range of the arbitrary opening angle under the control of the driver. The appropriate ventilation area size of the windshield assembly 16 can be adjusted according to the environment or the driver's physical perception. It should be noted that the arbitrary opening angle of the windshield assembly 16 may be 5 degrees, 7 degrees, 13 degrees, or the like. The arbitrary opening angle of the windshield assembly 16 refers to an angle defined by a projection of the windshield assembly 16 when the windshield assembly 16 is in the closed position and a projection of the windshield assembly 16 when the windshield assembly 16 is opened and held at an arbitrary opening position, projected onto a plane perpendicular to the left-right direction.

As an optional embodiment, the second fixing member 1645 is arranged on the dashboard 15 and fixedly connected to or integrally formed with the dashboard 15. The second fixing member 1645 is recessed downwards at left end or right end and defines a plat portion 1645a. The upper surface of the plat portion 1645a defines an inclined angle with the ground, and the space defined by the recess is used to place the first fixing member 1644. The sum of the projection heights of the first fixing member 1644 and the platform portion 1645a is substantially the same as the projection height of the second fixing member 1645 onto a plane perpendicular to the left-right direction. The adjusting member 1646 includes an operating portion 1646a and a screw portion (not shown). The second fixing member 1645 defines a threaded hole (not shown), and the screw portion is connected to the adjusting member 1646 through the threaded hole. The operating portion 1646a extends along the left-right direction to above the plat portion 1645a and has a certain distance from the upper surface of the plat portion 1645a. Turning the operating portion 1646a can move the adjusting member 1646 in the left-right direction. When the windshield assembly 16 is fully closed, the first fixing member 1644 is positioned above the plat portion 1645a, and the adjusting member 1646 is threaded through the first fixing member 1644 and provides a pre-load force in the left-right direction. At this time, the first fixing member 1644 can be in contact with the second fixing member 1645 under the action of the adjusting member 1646.

It should be noted that a projection of the inner contour of the first fixing member 1644 along the left-right direction may be approximately U-shaped. The adjusting member 1646 extends upward in the vertical direction and is threaded through the first fixing member 1644, thereby providing a pre-load force in the vertical direction.

When the windshield assembly 16 is closed, the first fixing member 1644 is in contact with the second fixing member 1645 under the action of the adjusting member 1646. When opening the windshield assembly 16, it is necessary to rotate the operating portion 1646a to loosen the adjusting member 1646, and then push the first fixing member 1644 to move the adjusting member 1646 within the internal space of the first fixing member 1644. After the adjusting member 1646 moves from the closed end to the open end to a suitable position, the adjusting member 1646 is tightened to fix the windshield assembly 16 by an angle. It should be noted that during the movement of the adjusting member 1646 in the internal space of the first fixing member 1644, the first fixing member 1644 and the second fixing member 1645 have not been completely separated. At this time, when the operating portion 1646a is tightened, the first fixing member 1644 comes into contact with the second fixing member 1645 under the action of the adjusting member. When the adjusting member 1646 moves from the closed end to the open end, the windshield assembly 16 can be fixed within the range of the arbitrary opening angle. If the adjusting member 1646 slides out from the open end and separates from the first fixing member 1644, and the first fixing member 1644 separates from the second fixing member 1645, the windshield assembly 16 continues to flip upward under the thrust of the driver and the support 165, and reaches a predetermined position, and the windshield assembly 16 is fully opened. By means of the first fixing member 1644, the second fixing member 1645, and the adjusting member 1646, not only can the windshield assembly 16 be opened or closed, but it can also be opened by arbitrary angle within a preset range.

In the present application, the outer frame assembly 162 is designed as a split type, the outer frame assembly 162 includes a first outer frame 1621, a second outer frame 1622, and a connection member 1623. When mounting, the windshield assembly 161 is first inserted into the first outer frame 1621 and the second outer frame 1622, and then connecting the first outer frame 1621 and the second outer frame through the connection member 1623 to complete the assembly. In this way, the first outer frame 1621 can be detachably connected to the second outer frame 1622, thereby reducing the assembly difficulty of the outer frame assembly 162 and improving the mounting efficiency of the outer frame assembly 162.

It should be understood that for those skilled in the art, improvements or transformations can be made based on the above description, and all such improvements and transformations should fall within the scope of protection of the claims attached to this application.

The above embodiments only express several embodiments of the present application, and their descriptions are more specific and detailed, but should not be understood as limiting the scope of patent protection. It should be pointed out that for ordinary technical personnel in this field, several modifications and improvements can be made without departing from the concept of this application, which are within the scope of protection of this application. Therefore, the scope of protection of this application should be based on the attached claims.

## Claims

1. An all-terrain vehicle comprising:
a frame;
a plurality of wheels connected to the frame;
a vehicle cover at least partially arranged on the frame;
a windshield assembly comprising a mount device and connected to the frame by the mount device;
**characterized in that**
the windshield assembly further comprises a windshield and an outer frame assembly, the windshield is made of colorless and transparent amorphous thermoplastic materials, and the outer frame assembly is designed as a split type and comprises a first outer frame, a second outer frame, and a connection member, the first outer frame and the second outer frame are connected by the connection member, and the first outer frame and the second outer frame cooperatively define a receiving space, and the windshield is received in the receiving space.

2. The all-terrain vehicle of claim 1, wherein the windshield assembly further comprises a lock device, the mount device is arranged at the upper end of the outer frame assembly, the lock device is arranged at the lower end of the outer frame assembly, the mount device comprises a first rotating member and a second rotating member, and the mount positions of the first rotating member, the second rotating member, and the lock device defines a triangular structure.

3. The all-terrain vehicle of claim 2, wherein the windshield assembly is capable of rotating by means of the first rotating member and the second rotating member of the mount device, and a maximum rotation angle of the windshield assembly is greater than or equal to 60 degrees and less than or equal to 70 degrees.

4. The all-terrain vehicle of claim 3, wherein the maximum rotation angle of the windshield assembly is greater than or equal to 62 degrees and less than or equal to 68 degrees.

5. The all-terrain vehicle of claim 3, wherein the maximum rotation angle of the windshield assembly is greater than or equal to 64 degrees and less than or equal to 66 degrees.

6. The all-terrain vehicle of claim 2, wherein the first rotating member and the second rotating member are hinges.

7. The all-terrain vehicle of claim 2, wherein the lock device comprises a first fastener, a second fastener, and an operator, the first fastener is arranged on the outer frame assembly, and the first fastener and the second fastener are connected by the operator; the first fastener has a first mating portion and a second mating portion, when the operator is in the first mating portion, the windshield assembly is fully closed, and when the operating member is in the second mating portion, the windshield assembly is partially opened.

8. The all-terrain vehicle of claim 7, wherein the partially opened angle of the windshield assembly is greater than 0 degree and less than or equal to 10 degrees.

9. The all-terrain vehicle of claim 7, wherein the partially opened angle of the windshield assembly is greater than 4 degrees and less than or equal to 6 degrees.

10. The all-terrain vehicle of claim 7, wherein the second fastener defines a receiving groove extending substantially along a width direction of the all-terrain vehicle, and the operator is at least partially received in the receiving groove and is capable of sliding in the receiving groove.

11. The all-terrain vehicle of claim 10, wherein the operator comprises an insertion portion and a handle portion, the insertion portion is at least partially received in the receiving groove and is capable of sliding along the width direction of the all-terrain vehicle in the receiving groove; the second fastener comprises a first limit portion and a second limit portion, when the handle portion in positioned in the first limit portion, the insertion portion is absolutely received in the receiving groove; when the handle portion is positioned in the second limit portion, the insertion portion mates with the first mating portion or the second mating portion.

12. The all-terrain vehicle of claim 7, wherein the first mating portion and the second mating portion may be through holes and/or slots.

13. The all-terrain vehicle of claim 7, wherein the operator further comprises an elastic element for providing a pre-load force along the width direction of the al-terrain vehicle.

14. The all-terrain vehicle of claim 7, wherein the first fastener is fixedly connected or integrally formed with the outer frame assembly.

15. The all-terrain vehicle of claim 7, wherein the first fastener further comprises a protruding grip portion, and the surface of the protruding grip portion is designed with a concave-convex pattern.

16. The all-terrain vehicle of claim 2, wherein the lock device further comprises a first fixing member, a second fixing member, and an adjusting member, the first fixing member is arranged on the outer frame assembly, and the adjusting member is adjustably connected to the second fixing member, and the first fixing member and the second fixing member are connected by the adjusting member; the first fixing member has a first end and a second end, and the adjusting member is capable of sliding between the first end and the second end, when the adjusting member is at the second end, the windshield assembly is completely closed, and when the adjusting member slides between the first end and the second end, the windshield assembly is partially opened and the partially opened angle of the windshield assembly is able to be adjusted arbitrarily within the preset angle range.

17. The all-terrain vehicle of claim 16, wherein when the adjusting member slides between the first end and the second end, the windshield assembly is partially opened and the partially opened angle of the windshield assembly is able to be adjusted arbitrarily within the preset angle range, the partially opened angle of the windshield assembly is greater than 0 degree and less than or equal to 15 degrees.

18. The all-terrain vehicle of claim 16, wherein the first end is an opened end, and the second end is a closed end.

19. A windshield assembly applied to all-terrain vehicle, comprising:
a windshield and an outer frame assembly;
**characterized in that**
the outer frame assembly is designed as a split type and includes a first outer frame, a second outer frame, and a connection member, the first outer frame and the second outer frame are connected by the connection member, and the first outer frame and the second outer frame cooperatively define a receiving space, and the windshield is received in the receiving space.

20. The windshield assembly of claim 19, wherein a first receiving groove is defined on the inner side of the first outer frame, a second receiving groove is defined on the inner side of the second outer frame, and the windshield is received in the receiving groove and the second receiving groove.

21. The windshield assembly of claim 20, wherein the windshield further comprises a sealing strip arranged around the windshield and abuts against the first receiving groove and the second receiving groove.

22. The windshield assembly of claim 19, wherein the windshield assembly further comprises a mount device and a lock device, the mount device is arranged at the upper end of the outer frame assembly, the lock device is arranged at the lower end of the outer frame assembly, the mount device comprises a first rotating member and a second rotating member, and the mount positions of the first rotating member, the second rotating member, and the lock device defines a triangular structure.

23. The windshield assembly of claim 22, wherein the windshield assembly is capable of rotating by means of the first rotating member and the second rotating member of the mount device, and a maximum rotation angle γ of the windshield assembly is greater than or equal to 60 degrees and less than or equal to 70 degrees.

24. The windshield assembly of claim 19, wherein the maximum rotation angle γ of the windshield assembly is greater than or equal to 62 degrees and less than or equal to 68 degrees.

25. The windshield assembly of claim 22, wherein the lock device comprises a first fastener, a second fastener, and an operator, the first fastener is arranged on the outer frame assembly, and the first fastener and the second fastener are connected by the operator;
the first fastener has a first mating portion and a second mating portion, when the operator is in the first mating portion, the windshield assembly is fully closed, and when the operator is in the second mating portion, the windshield assembly is partially opened.

26. The windshield assembly of claim 25, wherein the second fastener defines a receiving groove extending substantially along a width direction of the all-terrain vehicle, and the operator is at least partially received in the receiving groove and is capable of sliding along a left-right direction in the receiving groove.

27. The windshield assembly of claim 19, wherein the windshield assembly further comprises a support, wherein the support is configured as two gas springs, and the two gas springs are respectively arranged on two sides of the outer frame assembly.

28. An all-terrain vehicle comprising:
a frame;
a plurality of wheels connected to the frame;
a vehicle cover at least partially arranged on the frame;
a windshield assembly comprising a mount device and connected to the frame by the mount device;
a wiper device at least partially mounted on the windshield assembly;
**characterized in that**
the windshield assembly further comprises a windshield and an outer frame assembly, the windshield is made of colorless and transparent amorphous thermoplastic materials, and the outer frame assembly is designed as a split type and includes a first outer frame, a second outer frame, and a connection member, the first outer frame and the second outer frame are connected by the connection member, and the first outer frame and the second outer frame cooperatively define a receiving space, and the windshield is received in the receiving space;
the windshield assembly defines a mounting hole, and the wiper device at least partially passes through the mounting hole; the wiper device comprises a nozzle; the nozzle comprises two water outlet portions arranged radially around the nozzle, and an angle defined between the two water outlets is greater than or equal to 70 degrees and less than or equal to 110 degrees.

29. The all-terrain vehicle of claim 28, wherein the windshield assembly further comprises a lock device, the mount device is arranged at the upper end of the outer frame assembly, the lock device is arranged at the lower end of the outer frame assembly, the mount device comprises a first rotating member and a second rotating member, and the mount positions of the first rotating member, the second rotating member, and the lock device defines a triangular structure.

30. The all-terrain vehicle of claim 29, wherein the windshield assembly is capable of rotating by means of the first rotating member and the second rotating member of the mount device, and a maximum rotation angle of the windshield assembly is greater than or equal to 60 degrees and less than or equal to 70 degrees.

31. The all-terrain vehicle of claim 30, wherein the maximum rotation angle of the windshield assembly is greater than or equal to 62 degrees and less than or equal to 68 degrees.

32. The all-terrain vehicle of claim 30, wherein the maximum rotation angle of the windshield assembly is greater than or equal to 64 degrees and less than or equal to 66 degrees.

33. The all-terrain vehicle of claim 28, wherein the angle defined between the two water outlet portions is greater than or equal to 80 degrees and less than or equal to 100 degrees.

34. The all-terrain vehicle of claim 28, wherein the angle defined between the two water outlet portions is greater than or equal to 90 degrees and less than or equal to 95 degrees.

35. The all-terrain vehicle of claim 28, wherein the nozzle further comprises a connection portion passing through the mounting hole, and the connection portion is capable of rotating in the mounting hole.

36. The all-terrain vehicle of claim 28, wherein the wiper device further comprises a wiper blade and a driving component, wherein the wiper blade comprises a rotation shaft at least partially passing through the mounting hole, the wiper blade swings back and forth around the rotation shaft within a predetermined angle range under the driving of the driving component.

37. The all-terrain vehicle of claim 28, wherein the wiper device further comprises an operating member, the operating member is a button, and the button is capable of generating control instructions in response to external contact, pressing, and other applied forces, and transmitting the instructions to a control unit, the control unit is capable of determining the indication results for the wiper blade and nozzle based on the control instructions from the buttons, the indication result indicates the opening and/or closing of the wiper blade and the nozzle.
